# EUROPEAN PATENT APPLICATION

(11) **EP 3 816 652 A1**
(43) Date of publication of application: **05.05.2021**
(21) Application number: 19825539.0
(22) Date of filing: 26.06.2019
(51) Int. Cl.: G01S 7/00

(54) **ELECTRIC DEVICE WHICH APPLIES RADAR**

(30) Priority: 26.06.2018 CN 201810669338
(71) Applicant: Positec Power Tools (Suzhou) Co., Ltd, Suzhou, Jiangsu 215123 (CN)
(72) Inventor: DALFRA, Davide, 36100 Vicenza (IT)
(74) Representative: Dentons UK and Middle East LLP
(86) International application number: PCT/CN2019/093086
(87) International publication number: WO 2020/001490

(57) **Abstract**

An electric device, including a body, a working module, a control module, and a radar, where the radar includes: an antenna unit, configured to transmit and receive an electromagnetic wave signal; a transmitting unit, configured to generate an electromagnetic wave signal transmitted by the antenna unit; a receiving unit, configured to process an electromagnetic wave signal received by the antenna unit; and a control unit, connected to the transmitting unit and the receiving unit; where the antenna unit, the transmitting unit, the receiving unit, and the control unit are integrated in one chip. The described chip-type radar is small in size and low in cost, the detection accuracy is improved through the combination of multiple radars, and the influence on appearance design is minimized.

## Description

### BACKGROUND

### Technical Field

The present invention relates to an electric device which applies a radar, and in particular, to a self-moving device and an electric tool which apply a radar.

### Related Art

A radar generally includes a transmitter, a transmitting antenna, a receiver, a receiving antenna, a processing part, and other auxiliary devices. The advantages of radar are that radar can detect long-distance targets both day and night and would not be blocked by fog, clouds, and rain, and radar has all-weather and all-time characteristics and has a certain penetration capability. Therefore, radar not only become an indispensable military electronic device, but is also widely used in social and economic developments (such as weather forecast, resource detection, and environmental monitoring) and scientific researches (astronomical research, atmospheric physics, ionospheric structure research, and the like).

Vehicle-mounted radars are particularly widely used. At present, vehicle-mounted radars mainly include millimeter-wave radars, laser radars, and the like. A millimeter-wave radar is small in size and strong in anti-environmental interference, and can meet requirements for all-weather adaptability of a vehicle, but does not have high measurement accuracy. A laser radar has high measurement accuracy, but is large in size and high in cost and has poor performance in extreme weather conditions such as rain, snow, and fog.

This application field of radar technology is still very important, but new short-range applications requiring high accuracy and low power consumption have emerged for industrial, medical, security, and consumer markets at present. Application examples include not only determining the distance to a nearby object and the location of the nearby object, but also inspecting material properties, such as thickness, size, dielectric properties, and material constitution, but these needs cannot be well met. Due to the various restrictions above, radar is rarely applied to the field of electric devices, and is less likely to be applied to an electric device having a low total price or a small size.

### SUMMARY

To overcome the defects in the prior art, the problem to be resolved by the embodiments is to provide an electric device which applies a radar with a small volume and high measurement accuracy.

A technical solution adopted in the embodiments to solve the existing technical problems is as follows:
An electric device, comprises:
   a body;
   a working module, mounted on the body;
   a control module, mounted on the body and connected to the working module; and
   a radar, mounted on the body and connected to the control module, wherein the radar comprises:
      an antenna unit, configured to transmit and receive an electromagnetic wave signal;
      a transmitting unit, connected to the antenna unit, and configured to generate an electromagnetic wave signal transmitted by the antenna unit;
      a receiving unit, connected to the antenna unit, and configured to process an electromagnetic wave signal received by the antenna unit; and
      a control unit, connected to the transmitting unit and the receiving unit;
the antenna unit, the transmitting unit, the receiving unit, and the control unit are integrated in one chip.

In an embodiment, the radar comprises a pulse coherent radar.

In an embodiment, the radar comprises a synthetic aperture radar configured to detect a shape of an object.

In an embodiment, the radar comprises a millimeter-wave radar which works in a millimeter-wave band.

In an embodiment, the antenna unit comprises one transmitting antenna and one receiving antenna.

In an embodiment, the radar identifies a material type of a detected object through a dielectric constant and/or surface morphology of the detected object.

In an embodiment, a power loss of the chip when working at a specific scanning frequency is less than 50 mw.

In an embodiment, the power loss of the chip when working at the specific scanning frequency is less than 20 mw.

In an embodiment, the power loss of the chip when working at the specific scanning frequency is less than 1 mw.

In an embodiment, an area of the chip is less than 100 mm².

In an embodiment, the area of the chip is less than 30 mm².

In an embodiment, the radar comprises a rotation unit configured to drive the radar to rotate.

In an embodiment, the radar transmits multiple electromagnetic waves, receives echoes, and calculates a spatial parameter and/or a physical parameter in a rotation plane.

In an embodiment, two or more radars are mounted on the electric device.

In an embodiment, the radars are arranged in a preset rule, so that a detection range of the radars is greater than or equal to a preset range.

In an embodiment, a beam direction of the radar is substantially perpendicular to or parallel to a working surface of the electric device.

In an embodiment, the radar is mounted in the body.

In an embodiment, the electric device comprises a self-moving device which travels and works in a working region, and the self-moving device comprises a drive module mounted on the body and configured to drive the self-moving device to travel.

In an embodiment, the radar is configured to identify a material type of a working surface of the self-moving device, the control module determines whether the working surface is a safe surface according to the material type, and the control module controls, based on the working surface being an unsafe surface, the drive module to turn.

In an embodiment, the radar is configured to detect an obstacle, and the control module controls a travelling direction of the drive module according to the obstacle detected by the radar.

In an embodiment, the radar is configured to identify a material type of the obstacle, and the control module determines whether it is safe according to the material type, and controls the drive module to turn in an unsafe status to avoid the obstacle.

In an embodiment, the radar is configured to identify a vital sign of the obstacle, and the control module controls, based on the vital sign, the drive module to turn to avoid the obstacle.

In an embodiment, the radar detects an animal or a human body by detecting respiration or pulse.

In an embodiment, the electric device comprises an electric tool.

In an embodiment, the radar is configured to detect a working surface of the electric tool.

In an embodiment, the radar is configured to detect a material type of the working surface, and the control module controls a working parameter of the electric tool according to the material type.

In an embodiment, the working module comprises a drive motor to drive a working head fitted with the electric tool, and the working parameter comprises at least one of a type of the working head, output torque of the working module, and a working mode of the electric tool.

In an embodiment, the radar is configured to detect a distance between the working surface and a reference surface, the reference surface is an initial working surface, and the control module controls the working module according to the distance.

In an embodiment, the working module comprises a moving element, the radar detects a distance between the moving element and a user, and the control module controls, based on the distance being less than a preset distance, the working module to stop working.

In an embodiment, the electric tool comprises an electric saw, and the moving element comprises a blade.

In an embodiment, a beam direction of the radar is towards the moving element.

In an embodiment, the electric tool comprises an electric drill or an electric hammer.

Compared with the prior art, the beneficial effects of the embodiments are that: a chip-type radar has good integration, and applying the chip-type radar to the electric device can minimize the influence on appearance design to make layout of the electric device more compact; due to a small volume of the chip-type radar, more sensors can be mounted on an electric device of a same size, thereby making a detection result more accurate.

### BRIEF DESCRIPTION OF THE DRAWINGS

The foregoing objects, technical solutions, and beneficial effects of the embodiments can be implemented with reference to the accompanying drawings below:
FIG. 1 is a schematic diagram of modules of a radar in one of embodiments.
FIG. 2 is a schematic diagram of modules of an electric device in one of embodiments.
FIG. 3 is a schematic diagram of a transmitter-receiver system of a pulse coherent radar in one of embodiments.
FIG. 4 is a schematic diagram of an automatic working system in one of embodiments.
FIG. 5 is a schematic diagram of a self-moving device in one of embodiments.
FIG. 6 is a schematic diagram of a radar axis relationship in one of embodiments.
FIG. 7 is a schematic diagram of radar arrangement and detection range in one of embodiments.
FIG. 8 is a schematic diagram of an electric drill in one of embodiments.

### DETAILED DESCRIPTION

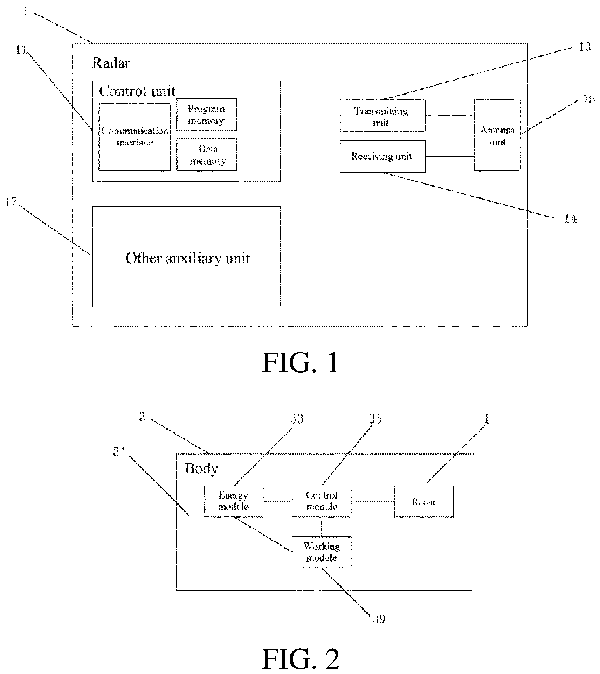

FIG. 1 is a functional block diagram of a radar in the embodiments. As shown in FIG. 1, a radar 1 includes a control unit 11, a transmitting unit 13, a receiving unit 14, and an antenna unit 15, and further includes another auxiliary unit 17. The control unit 11, the transmitting unit 13, the receiving unit 14, and the antenna unit 15 are integrated in one chip, and further, the other auxiliary unit 17 may also be integrated in the chip. In this embodiment, the transmitting unit 13 is connected to a transmitting antenna 151, and the receiving unit 14 is connected to a receiving antenna 153. The transmitting unit 13 generates an electromagnetic wave signal and transmits the electromagnetic wave signal through the transmitting antenna 151, the receiving unit 14 receives an echo through the receiving antenna 153, and the control unit 11 obtains information such as a distance by analyzing the echo.

In an embodiment, the antenna unit 15 includes a transmitting antenna and a receiving antenna. In other embodiments, the antenna unit may include one transmitting antenna and two or more receiving antennas, or two or more transmitting antennas and one receiving antenna, or two or more transmitting antennas and two or more receiving antennas. In other embodiments, the transmitting antenna 151 and the receiving antenna 153 may be a same antenna.

FIG. 2 is schematic diagram of modules of an electric device according to the embodiments. As shown in FIG. 2, an electric device 3 includes a body 31, a working module 39 configured to perform a work task, a control module 35 configured to obtain detection information of a sensor such as a radar 1 and control the working module 39, and an energy module 33 configured to provide energy for the electric device 3, where the working module 39, the control module 35, and the energy module 33 are all mounted on the body 31. The specific physical form of the control module 35 is a control circuit board provided with one or more processors, a memory, other related elements and devices, and a corresponding peripheral circuit. The control module 35 includes a built-in control program to execute a predetermined instruction and control the electric device 3 to perform a work task.

To complete detection of an external environment, the electric device 3 is further provided with the radar 1. The radar 1 can be integrated in a physical housing of a product. Because a radio signal can be transmitted through plastic and glass, a high degree of freedom is provided during designing a final product. In addition, because the radar 1 has a different wavelength from most of other electromechanical devices, the radar 1 faces a small signal interference risk and is not affected by a sound wave and light conditions. Because the radar 1 is a chip-type radar, the antennas is integrated inside the chip, and the integration is good, the radar 1 can be mounted at any position of the electric device 3 according to different usage scenarios, for example, at different positions such as an interior and an outer surface of the body 31, and can also be mounted on an ordinary PCB.

In an embodiment, the other auxiliary unit 17 of the radar 1 includes a power supply unit. In this embodiment, the power supply unit includes low-dropout regulators and an enabling unit. Each low-dropout regulator provides a voltage of 1.8 V, and the enabling unit can generate a reset signal in each power supply circuit. In other embodiments, the other auxiliary unit 17 of the radar 1 further includes a timing unit and the like.

In an embodiment, the radar 1 is a pulse coherent radar. A pulse-based radar system is configured to measure a transit time between a transmitting unit 13 and a receiving unit 14 in the process of measuring a wavelet. For example, a reflected wavelet can be mixed with a locally generated reference wavelet, where the reference wavelet is delayed by a known time with respect to a transmitted wavelet. A delay achieving a maximum mixed product corresponds to the transit time above. Due to an impulsive nature of a measurement signal, the radar system of such a type is suitable for application desiring low power consumption. However, to provide a highly accurate measurement result, it is necessary to accurately control a delay between the reflected wavelet and the reference wavelet.

In an embodiment, the radar 1 is a synthetic aperture radar, which measures a distance based on a time difference between transmitting an electromagnetic pulse and receiving a target echo, and performs distance measurement and two-dimensional imaging based on a movement track of a platform, where two-dimensional coordinate information is distance information and azimuth information perpendicular to the distance, so as to detect a shape of a target object.

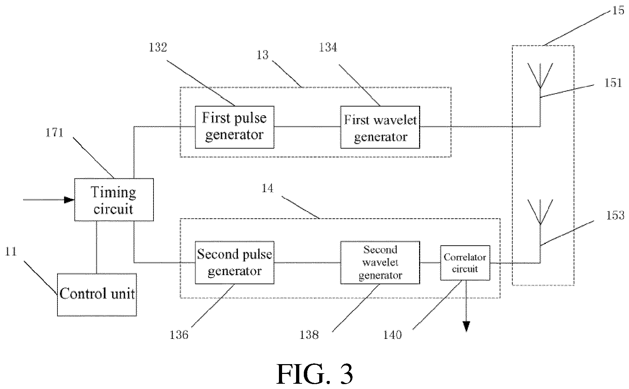

FIG. 3 is a schematic diagram of a transmitting-receiving system of a pulse coherent radar in the embodiments. As shown in FIG. 3, the pulse coherent radar includes a transmitting-receiving system. The system includes a transmitting unit 13, the transmitting unit 13 is configured to transmit a wavelet, and specifically, the transmitting unit 13 includes a first pulse generator 132 and a first wavelet generator 134. The system includes a receiving unit 14, the receiving unit 14 is configured to receive a wavelet, and specifically, the receiving unit 14 includes a second pulse generator 136 and a second wavelet generator 138 and further includes a correlator circuit 140. The system further includes a timing circuit 171, and the timing circuit 171 is configured to receive a reference clock signal, output a first trigger signal to trigger transmission of a wavelet, and output a second trigger signal to trigger generation of a reference wavelet. The first pulse generator 132 outputs a first pulse signal after receiving the first trigger signal from the timing circuit 171, and the first wavelet generator 134 outputs a wavelet in response to the first pulse signal. The second pulse generator 136 outputs a second pulse signal after receiving the second trigger signal from the timing circuit 171, and the second wavelet generator 138 outputs a reference wavelet in response to the second pulse signal. In this embodiment, a wavelet refers to an electromagnetic oscillation signal having a certain amplitude envelope, and the amplitude envelope starts from zero amplitude, increases to a maximum amplitude, and then decreases to zero amplitude. A wavelet may include one or more oscillations. The first pulse generator is shown as a component separated from the first wavelet generator in FIG. 3, but this separation is only made to facilitate understanding. For example, a function of the first pulse generator 132 may be implemented in a same circuit as the first wavelet generator 134. In particular, a same wavelet generator can be used for generating both a wavelet to be transmitted and a reference wavelet.

In an embodiment, by using a picosecond-level processing solution of a pulse coherent radar, millimeter-level accuracy can be achieved in a distance measurement range within 2 meters, and a continuous scanning update rate can reach 1500 Hz.

In an embodiment, a radar 1 works in a millimeter-wave band. Millimeter wave refers to a frequency band from 30 GHz to 300 GHz (wavelength is 1-10 mm). A wavelength of a millimeter wave is between a centimeter wave and a light wave, and therefore, a millimeter wave has the advantages of microwave guidance and photoelectric guidance. Due to attenuation of a wireless signal, when signal transmission power is constant, the higher the frequency of a millimeter-wave radar, the shorter the detection range thereof. In this embodiment, the radar 1 uses a license-free 60 GHz frequency band, and very small antennas and an ultra-short pulse can be used, thereby further achieving chip miniaturization and low power consumption.

In an embodiment, a power loss of the radar 1 is less than 50 mW. An update rate of the radar 1 is programmable, and performance can be optimized based on an expected usage scenario. For the radar 1, taking a working temperature of 25°C and a working voltage of 1.8 V as an example, when a scanning frequency is 0.1 Hz, an average power loss is less than 0.3 mW; when the scanning frequency is 10 Hz, the average power loss is less than 1 mW; and when the scanning frequency is 100 Hz, the average power loss is less than 20 mW.

In an embodiment, an area of a chip where the radar 1 is located is less than 100 mm². In this embodiment, the chip has a size of 7.0 mm × 7.0 mm × 1.2 mm. By means of the advantage of a small seeker of a millimeter-wave radar and high integration of the radar 1, the entire system is smaller than those in most existing solutions, and has a lower price and better practicability.

In an embodiment, an area of a chip where the radar 1 is located is less than 30 mm². In this embodiment, the chip has a size of 5.2mm × 5.2 mm × 0.88 mm. Certainly, due to different sizes and layouts of different components, the area of the chip changes accordingly.

In an embodiment, half-power point beamwidth of the radar 1 is 80 degrees in a horizontal direction and 40 degrees in a height direction. The radar 1 has a beam direction, and the beam direction refers to a maximum radiation direction of the radar 1.

In an embodiment, the radar 1 includes a rotation unit, one end of the rotation unit is fixed on an electric device 3, and a control unit 11 controls the rotation unit to rotate or stop, so as to drive the radar 1 to rotate or stop. By controlling the rotation unit, information within a 360-degree range around the radar 1 can be obtained. It can be understood that a specific rotation mode and rotation angle can be adjusted according to actual needs, and no repeated description is provided herein.

In an embodiment, the radar 1 transmits multiple electromagnetic waves, receives echoes, and calculates a spatial parameter and/or a physical parameter in a rotation plane.

In an embodiment, the electric device 3 is provided with two or more radars 1, which are arranged in a preset rule. Because a detection range of a chip-type radar is limited, mounting multiple radars 1 can increase the detection range of the radars 1, so as to meet detection requirements of the electric device 3. Herein, the preset rule may be a manner such as transverse mounting, longitudinal mounting, or circumferential mounting.

In an embodiment, a radar array is mounted on the electric device 3, that is, environmental information of a larger range is obtained through a combination of multiple radars 1. In this embodiment, the half-power point beamwidth of the radar 1 in the horizontal direction is 80 degrees. To obtain an accurate detection result within a 360-degree range, radars 1 can be mounted in a same plane in a 2×2 arrangement, so that the detection range of the radars 1 can cover 360 degrees in the same plane. It can be understood that the number and arrangement of radars 1 can be adjusted according to specific detection requirements.

In an embodiment, the electric device 3 uses the radar 1 to perform environmental detection. The radar 1 transmits an electromagnetic wave. The electromagnetic wave would be reflected when hitting an obstacle in front. The radar 1 receives a reflected echo, and can obtain information such as a distance by analyzing the echo. A control module 35 controls a working module 39 and the like based on a detection result of the radar 1.

In an embodiment, the electric device 3 includes a self-moving device 5. In description of the self-moving device 5 in the embodiments, "front" represents a heading direction of the self-moving device, "rear" represents a direction opposite to "front", "left" represents a left side in the travel direction, "right" represents a right side of the travel direction opposite to "left", "up" represents a direction away from a working surface of a machine during work, and "down" represents a direction close to the working surface of the machine and opposite to "up".

The self-moving device 5 includes a body 31, a radar 1 located on the body 31, a drive module 37 located at a bottom of the body 31, a working module 39 configured to perform work, a control module 35 configured to control the self-moving device 5 to automatically work and move, and an energy module 33 which provides energy for the self-moving device 5. The self-moving device 5 may be an intelligent lawn mower or a robotic vacuum cleaner or other devices that can move autonomously to complete work.

In an embodiment, the radar 1 is configured to identify a material type. Data detected by the radar 1 includes more information than simple distance and speed. A material can be classified by analyzing the data. In this embodiment, the radar 1 analyzes the data in combination with a dielectric constant of the material itself.

In an embodiment, the self-moving device 5 is a robotic vacuum cleaner. When the robotic vacuum cleaner travels from one surface to another surface, the control module 35 timely adjusts a height of the working module 39 by acquiring material information, to prevent reduction of work efficiency caused by the robotic vacuum cleaner being sucked on a working surface when entering a carpet and other surfaces. When the radar 1 detects a foreign object such as spilled liquid or animal feces, the control module 35 can timely adjust a vacuuming manner to prevent the foreign object from further spreading.

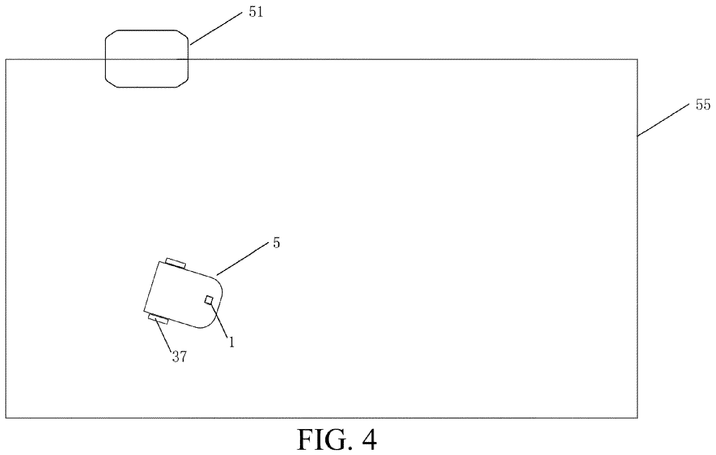

In an embodiment, FIG. 4 is a schematic diagram of an automatic working system in one of embodiments. As shown in FIG. 4, a self-moving device 5 travels and works in a working region 55 specified by a user. In this embodiment, the self-moving device 5 is an intelligent lawn mower, and a working surface in the working region 55 of the user is a lawn. In a stage of mounting by the user, the user clears up a lawn boundary, to make working surfaces inside and outside the lawn boundary obvious different. A radar 1 can distinguish a material type of a surface detected, and a control module 35 controls the self-moving device 5 within the working region 55 based on an identification result of the radar 1. If the radar 1 identifies that the surface detected is not a lawn, but cement or other surfaces, the control module 35 determines that the self-moving device 5 reaches a boundary of the working region 55, and controls a drive module 37 to move back or turn. In this embodiment, the radar 1 is mounted below the self-moving device 5 and faces a surface to be detected. In a preferred embodiment, a beam direction of the radar 1 is perpendicular to the surface to be detected.

In an embodiment, the radar 1 can not only identify whether the surface detected is a lawn, but also identify different types and density of grass in a lawn. There are many varieties of lawn grass, such as cool-season grass and warm-season grass. Different varieties of grass grow in different ways, and have different growth density, stem and leave sizes, and hardness. There may even be many varieties of grass planted in a same lawn. For different lawns, a working mode of the self-moving device 5, including setting of a working plan, a travelling mode of the drive module 37, a working mode of a working module 39, and the like, can be adjusted accordingly, so as to ensure working efficiency of the self-moving device 5. The radar 1 identifies hardness or density of a lawn by analyzing an echo, and the control module 35 adjusts the working mode of the self-moving device 5 based on an identification result of the radar 1, so as to improve cutting efficiency of the self-moving device 5. Specifically, the working module 39 includes a cutting motor. A lawn having high density may cause original output torque of the cutting motor to be insufficient to complete an original cutting amount, then the control module 35 controls the cutting motor to increase output torque. It can be understood that if the radar identifies that the density of a lawn is high and this may cause incomplete cutting of the lawn in a region in which the self-moving device 5 travels at an original travelling speed, the travelling speed of the drive module 37 can be reduced.

In an embodiment, the radar 1 is mounted on a front side of the self-moving device 5, and has a beam direction diagonally down toward a surface that the self-moving device 5 will pass, and there is an included angle between the beam direction and a surface to be detected. In this embodiment, the radar 1 can detect a surface in front of the self-moving device 5 in advance, and the control module 35 makes a prediction based on a detection result, and controls the drive module 37 to decelerate or turn, or the like. In a preferred embodiment, the radar 1 detects a distance between the surface in front and the self-moving device 5 and a material type of the surface in front, and the control module 35 can determine, based on results of the above detection, whether there is a region such as a pit or a pool which cannot be entered on the surface in front, so as to control the drive module 37 to turn, thereby preventing the self-moving device 5 from entering such a region.

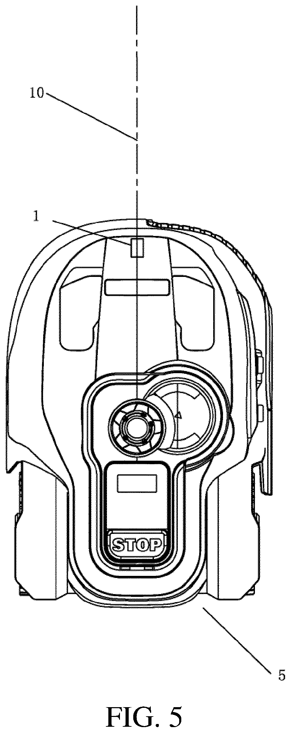

FIG. 5 is a schematic diagram of a self-moving device in one of embodiments. As shown in FIG. 5, in the embodiment, a radar 1 is mounted on a front side of a self-moving device 5 and faces a heading direction of the self-moving device 5 to detect an obstacle in the heading direction. When the radar 1 detects an obstacle within its effective detection range, a control module 35 controls a drive module 37 to move back or turn to prevent the self-moving device 5 from being damaged by collision with the obstacle. In a preferred embodiment, a beam direction 10 of the radar 1 is parallel to a surface where the heading direction of the self-moving device 5 is located.

It can be understood that, according to needs of different scenarios, the self-moving device 5 may also be provided with radars 1 at other positions, including a rear side or other circumferential directions such as left and right of the self-moving device 5, to detect obstacles in corresponding directions. In an embodiment, when an environment in a working region of the self-moving device 5 is complicated, for example, there is a narrow passage, radars 1 are mounted on left and right sides of the self-moving device 5, and the control module 35 performs determining by using detection results of the radars 1, so that the self-moving device 5 can pass the narrow passage more efficiently.

In an embodiment, a preset distance for obstacle detection is set in the control module 35, and when a distance between the self-moving device 5 and an obstacle is less than or equal to the preset distance, the self-moving device 5 avoids the obstacle and does not continue moving toward the obstacle, thereby achieving non-contact obstacle avoidance of the self-moving device 5. Different obstacle avoidance purposes can be achieved through different preset distance values. When the distance is relatively small, relatively short-distance non-contact obstacle avoidance can be achieved, and when the distance is relatively large, long-distance non-contact obstacle avoidance with respect to the short-distance non-contact obstacle avoidance can be achieved. To ensure that the self-moving device 5 can identify an obstacle in the heading direction, the effective detection range of the radar 1 covers a region directly in front of the body 31 of the self-moving device 5, so that the radar 1 can detect an obstacle directly in front of the self-moving device 5 during travelling, thereby preventing the self-moving device from colliding with the obstacle during travelling.

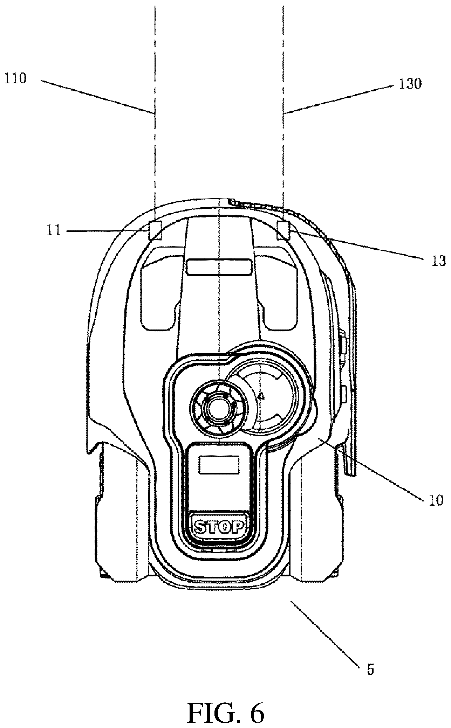

FIG. 6 is a schematic diagram of a radar axis relationship in one of embodiments. Taking a left-right direction of a self-moving device 5 as a width direction, an effective detection width of a radar 1 needs to cover a width of a body 31. Transmitting and receiving ranges of antennas of a radar are limited. To ensure that an effective monitoring range of the radar 1 can cover the width of the body 31, in an embodiment, as shown in FIG. 6, a first radar 11 and a second radar 13 are mounted on a front side of the self-moving device 5, a first beam direction 110 of the first radar 11 and a second beam direction 130 of the second radar 13 are parallel to each other, and a detection range is towards the heading direction of the self-moving device 5.

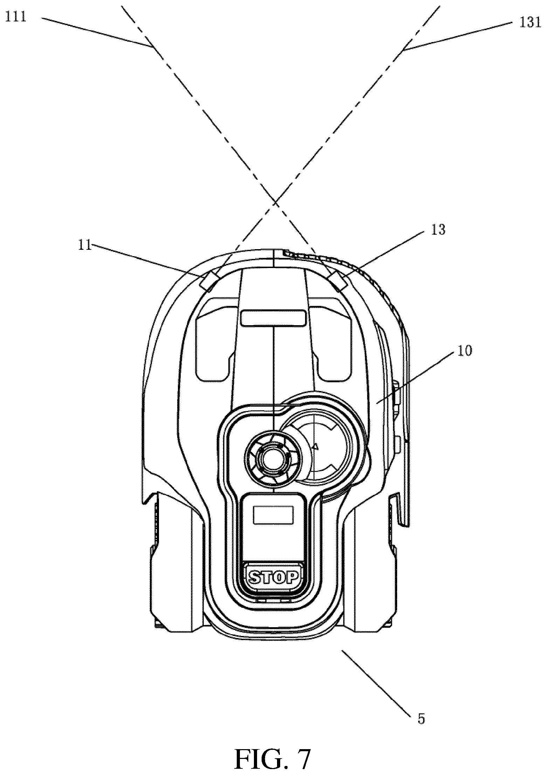

FIG. 7 is a schematic diagram of radar arrangement and detection range in one of embodiments. In an embodiment, as shown in FIG. 7, a first radar 11 and a second radar 13 are mounted on a self-moving device 5 at an angle, so that a first beam direction 110 and a second beam direction 130 intersect, thereby reducing a detection blind region of a radar 1 in a short range, and achieving short-distance obstacle avoidance. A location and a direction of an obstacle are obtained through echo reception, thereby improving the obstacle positioning accuracy and helping the self-moving device 5 adapt to different working conditions. Moreover, a control module 35 can also take a targeted obstacle avoidance measure based on the direction of the obstacle. It can be understood that radars 1 can be combined differently according to requirements for layout, for example, four radars 1 can be used for forming four detection regions to further accurately position an obstacle.

In an embodiment, when the radar 1 detects an obstacle, the control module 35 further obtains a result of analysis on a material type of the obstacle by the radar 1. If the radar 1 detects an obstacle and then the control module 35 immediately controls a drive module 37 to move back or turn, a lawn around the obstacle cannot be cut. After obtaining a material type of the obstacle, the control module 35 can determine properties such as hardness of the material according to the material type. To avoid damage of the self-moving device 5 caused by too many collisions thereof with obstacles, if an obstacle has high hardness and the self-moving device 5 should not collide with the obstacle, the control module 35 determines that this situation is an unsafe situation and controls the drive module 37 to move back or turn; if an obstacle has low hardness and collision of the self-moving device 5 with the obstacle would not cause damage or other problems, the control module 35 determines that this situation is a safe situation, and controls the drive module 37 to continue travelling in a heading direction, and when a collision is detected, the control module 35 controls the drive module 37 to move back. In other embodiments, an obstacle may be a fragile object that is not suitable for collision, and if the radar 1 detects such a material type, the control module 35 controls the drive module 37 to move back or turn to avoid collision with the obstacle.

In an embodiment, the radar 1 identifies a vital sign of an obstacle, and if a vital sign of the obstacle is detected, the control module 35 controls, based on the vital sign detected by the radar 1, the drive module to turn so that the self-moving device avoids the obstacle having the vital sign.

In an embodiment, the radar 1 identifies whether an obstacle is a human body or other animal, and the control module 35 controls, based on a detection result of the radar 1, the drive module 37 to move back or turn so that the self-moving device 5 moves away from the human body.

In an embodiment, the radar 1 can identify a human body or an animal by detecting a vital sign such as respiration or pulse.

In an embodiment, the self-moving device 5 is an intelligent lawn mower. A working module 39 may cause injury to a user due to accidental contact by the user during working, and therefore, a shield needs to be mounted around the working module 39 to avoid injuries. The provision of the shield makes the self-moving device 5 unable to complete cutting to an edge. In this embodiment, for better cutting to an edge, the manner of providing the shield can be changed. Moreover, the radar 1 is mounted outside the working module 39, and multiple radars 1 are mounted, so as to ensure that a human body can be detected when approaching the working module 39 within a certain range. When the radar 1 detects a human body, the control module 35 controls the working module 39 to stop working to avoid injuries to the human body. In other embodiments, because the radar 1 has a detection range of a certain distance, to prevent the self-moving device 5 from frequently stopping working, an effective distance can be preset, for example, 1 meter, and when the radar identifies a human body within 1 meter, the control module 35 controls the working module 39 to stop working.

In an embodiment, an electric device 3 is an electric tool 7. The electric tool 7 includes: a body 31; a working module 39 mounted on the body 31 to fit with a working head 40 and output power to the working head 40; a control module 35 mounted on the body 31 and configured to control the working module 39; and an energy module 33 mounted on the body 31 and configured to provide energy to the working module 39 and/or the control module 35. The electric tool 7 in the embodiments may be a tool that completes a work task on a working surface, such as an electric drill, an electric hammer, an electric pick, a sanding machine, and a swing machine.

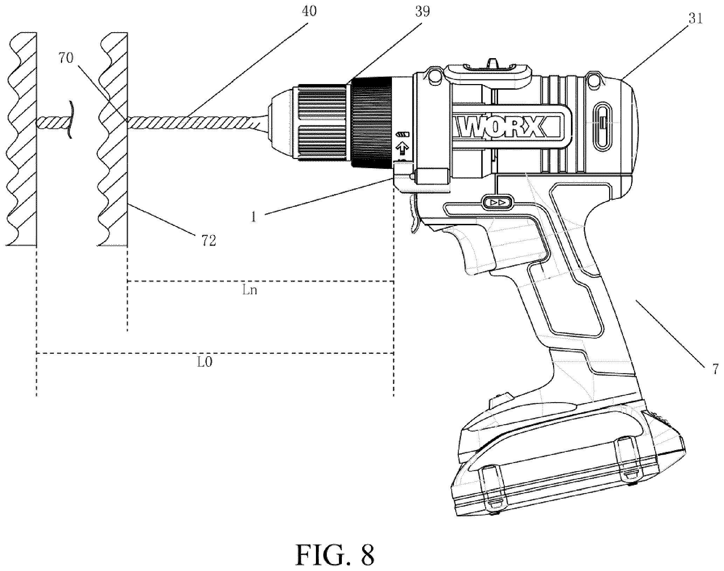

FIG. 8 is a schematic diagram of an electric drill in one of embodiments. In an embodiment, an electric tool 7 is an electric drill. As shown in FIG. 8, a working module 39 includes: a drive motor, provided in a body 31 and outputs rotation power, and further includes an output shaft, provided in the body 31 and connected to a working head 40 to drive the working head 40 to work, and having an output shaft axis. The body 31 has a body 31 front end for receiving the output shaft and axially extending along the output shaft axis. The radar 1 is mounted at the body 31 front end and has a detection range towards a working surface 70 of the electric drill. In a preferred embodiment, a beam direction of the radar 1 is perpendicular to the working surface 70.

In an embodiment, the radar 1 is configured to detect a material type of the working surface 70 of the electric tool 7, and the control module 35 controls a parameter of the working head 40 based on a detection result of the radar 1. In an embodiment, the electric tool 7 is an electric drill, and generally, different working surfaces 70 need to correspond to different working heads 40 to complete drilling work more efficiently. In this embodiment, optimal correspondences between different working surfaces 70 and working heads 40 are configured in the control module 35, for example, a drill bit corresponding to a working surface 70 of metal and the like is a twisted metal drill bit, a drill bit corresponding to a working surface 70 of wood or plastic and the like is a woodworking drill bit, and the like. In this embodiment, an indicator light is further mounted on the body 31, and is controlled by the control module 35. When the electric drill starts to work, the radar 1 starts to identify the working surface 70 in a detection direction, and if the control module 35 determines that the working surface 70 does not match the working head 40, the control module 35 controls the indicator light to flash to prompt a user to replace the drill bit. Certainly, the correspondences are not absolute, for example, a twisted metal drill bit is also suitable for wood. To reduce the frequency of replacing the drill bit by the user, in addition to an optimal choice, the control module 35 can also configure sub-optimal correspondences other than the optimal correspondences. In other embodiments, the electric tool 7 further includes a communication module, which can communicate with other user equipment. When determining that the working surface 70 does not match the working head 40, the control module 35 sends prompt information to user equipment through the communication module to prompt the user to replace the working head 40.

In an embodiment, the radar 1 is configured to detect the material type of the working surface 70 of the electric tool 7, and the control module 35 controls a working mode of the electric tool 7 based on a detection result of the radar 1. In an embodiment, the electric tool 7 is an electric hammer, and a working module 39 of the electric hammer includes a drive motor, and a motor shaft, a bevel gear shaft, an intermediate shaft, and an output shaft which are connected to the drive motor. The motor shaft can transmit power to the output shaft through the bevel gear shaft or the intermediate shaft. The intermediate shaft can be provided with a pendulum bearing to drive the output shaft to perform impact motion. The bevel gear shaft can drive the output shaft to rotate, to make the electric hammer in a drill gear or a hammer drill gear. If only the output shaft rotates, the electric hammer is in the drill gear; and if the output shaft rotates and the pendulum bearing drives the output shaft to perform impact motion, the electric hammer is in the hammer drill gear. The drill gear is mainly suitable for a working surface 70 having relatively low hardness, such as metal, wood, and plastic, and the hammer drill gear is mainly suitable for concrete, stone, and the like. When the electric hammer starts to work, the radar 1 starts to identify the working surface 70 in a detection direction, and if the radar 1 identifies that the working surface 70 does not match the working mode, the control module 35 prompts the user to switch the working mode. In other embodiments, the control module 35 may be configured to automatically switch the working mode according to the material type of the working surface 70 detected by the radar 1 to provide a more efficient and convenient working mode.

In an embodiment, the radar 1 is configured to detect the material type of the working surface 70 of the electric tool 7, and the control module 35 controls torque based on a detection result of the radar 1. In an embodiment, the electric tool 7 is a sanding machine, and a working module 39 includes a drive motor, a motor shaft fixedly connected to the drive motor, and an eccentric device fitted with the drive motor, where a bottom plate is fitted with the eccentric device. When facing different working surfaces 70, if output torque of the drive motor remains unchanged, polishing efficiency will be inevitably reduced. In this embodiment, different torque corresponding to different material types is configured for the control module 35. When the sanding machine starts to work, the radar 1 starts to identify the working surface 70 in a detection direction, and if the radar 1 identifies that the material type of the working surface 70 does not match current output torque, the control module 35 adjusts output torque of the drive motor based on a detection result of the radar 1 so that the output torque matches the working surface 70, thereby improving the polishing efficiency.

In an embodiment, the radar 1 is configured to detect a distance between the radar 1 and a reference surface 72. As shown in FIG. 8, in this embodiment, the electric tool 7 is an electric drill, and a hole depth setting module is mounted on a body 31, connected to a control module 35, and configured to set a drilling depth. The reference surface 72 is a surface where a working head 40 is located when the electric tool 7, i.e., an electric drill, starts to work. If the working surface 70 of the electric drill is flat, an initial working surface 70 when the electric drill starts to work is the reference surface 72. Before the electric drill works, a user sets the drilling depth to D by the hole depth setting module. When the electric drill starts to work, the radar 1 detects a distance Lo to the working surface 70; then, the radar 1 continuously detects a distance Lₙ to the working surface 70 at a certain frequency, and if the control module 35 calculates that L₀-Lₙ=D, the control module 35 controls a working module 39 to stop working. At this time, the depth of the hole drilled by the electric drill is the depth set by the user.

In an embodiment, the working module 39 of the electric tool 7 includes a moving element, the radar 1 is configured to detect a distance between the moving element and the user, and when the distance is less than a preset distance, the control module 35 controls the working module 39 to stop working, so as to prevent the moving element from injuring the user.

In an embodiment, the electric tool 7 is an electric saw, and the moving element is a blade. During a working process of the electric saw, if a user approaches the blade, the control module 35 controls a working module to stop working to prevent the user from contacting the moving blade. Optionally, a beam direction of the radar 1 faces the moving element, and when the user approaches the moving element, the radar 1 can timely detect the user.

The foregoing embodiments only show several implementations of the embodiments and are described in detail, but they should not be construed as a limit to the patent scope of the embodiments. It should be noted that a person of ordinary skill in the art may further make several variations and improvements without departing from the concept of the embodiments, and these variations and improvements all fall within the protection scope of the embodiments. Therefore, the protection scope of the patent of the embodiments shall be topic to the appended claims.

## Claims

1. An electric device, comprising:
a body;
a working module, mounted on the body;
a control module, mounted on the body and connected to the working module; and
a radar, mounted on the body and connected to the control module, wherein the radar comprises:
an antenna unit, configured to transmit and receive an electromagnetic wave signal;
a transmitting unit, connected to the antenna unit, and configured to generate an electromagnetic wave signal transmitted by the antenna unit;
a receiving unit, connected to the antenna unit, and configured to process an electromagnetic wave signal received by the antenna unit; and
a control unit, connected to the transmitting unit and the receiving unit;
wherein
the antenna unit, the transmitting unit, the receiving unit, and the control unit are integrated in one chip.

2. The electric device according to claim 1, wherein the radar comprises a pulse coherent radar.

3. The electric device according to claim 1, wherein the radar comprises a synthetic aperture radar configured to detect a shape of an object.

4. The electric device according to claim 1, wherein the radar comprises a millimeter-wave radar which works in a millimeter-wave band.

5. The electric device according to claim 1, wherein the antenna unit comprises one transmitting antenna and one receiving antenna.

6. The electric device according to claim 1, wherein the radar identifies a material type of a detected object through a dielectric constant and/or surface morphology of the detected object.

7. The electric device according to claim 1, wherein a power loss of the chip when working at a specific scanning frequency is less than 50 mw.

8. The electric device according to claim 7, wherein the power loss of the chip when working at the specific scanning frequency is less than 20 mw.

9. The electric device according to claim 7, wherein the power loss of the chip when working at the specific scanning frequency is less than 1 mw. mm².

10. The electric device according to claim 1, wherein an area of the chip is less than 100

11. The electric device according to claim 10, wherein the area of the chip is less than 30 mm².

12. The electric device according to claim 1, wherein the radar comprises a rotation unit configured to drive the radar to rotate.

13. The electric device according to claim 12, wherein the radar transmits multiple electromagnetic waves, receives echoes, and calculates a spatial parameter and/or a physical parameter in a rotation plane.

14. The electric device according to claim 1, wherein two or more radars are mounted on the electric device.

15. The electric device according to claim 15, wherein the radars are arranged in a preset rule, so that a detection range of the radars is greater than or equal to a preset range.

16. The electric device according to claim 1, wherein a beam direction of the radar is substantially perpendicular to or parallel to a working surface of the electric device.

17. The electric device according to claim 1, wherein the radar is mounted in the body.

18. The electric device according to claim 1, wherein the electric device comprises a self-moving device which travels and works in a working region, and the self-moving device comprises a drive module mounted on the body and configured to drive the self-moving device to travel.

19. The electric device according to claim 18, wherein the radar is configured to identify a material type of a working surface of the self-moving device, the control module determines whether the working surface is a safe surface according to the material type, and the control module controls, based on the working surface being an unsafe surface, the drive module to turn.

20. The electric device according to claim 18, wherein the radar is configured to detect an obstacle, and the control module controls a travelling direction of the drive module according to the obstacle detected by the radar.

21. The electric device according to claim 20, wherein the radar is configured to identify a material type of the obstacle, and the control module determines whether it is safe according to the material type, and controls the drive module to turn in an unsafe status to avoid the obstacle.

22. The electric device according to claim 20, wherein the radar is configured to identify a vital sign of the obstacle, and the control module controls, based on the vital sign, the drive module to turn to avoid the obstacle.

23. The electric device according to claim 22, wherein the radar detects an animal or a human body by detecting respiration or pulse.

24. The electric device according to claim 1, wherein the electric device comprises an electric tool.

25. The electric device according to claim 24, wherein the radar is configured to detect a working surface of the electric tool.

26. The electric device according to claim 25, wherein the radar is configured to detect a material type of the working surface, and the control module controls a working parameter of the electric tool according to the material type.

27. The electric device according to claim 26, wherein the working module comprises a drive motor to drive a working head fitted with the electric tool, and the working parameter comprises at least one of a type of the working head, output torque of the working module, and a working mode of the electric tool.

28. The electric device according to claim 25, wherein the radar is configured to detect a distance between the working surface and a reference surface, the reference surface is an initial working surface, and the control module controls the working module according to the distance.

29. The electric device according to claim 21, wherein the working module comprises a moving element, the radar detects a distance between the moving element and a user, and the control module controls, based on the distance being less than a preset distance, the working module to stop working.

30. The electric device according to claim 29, wherein the electric tool comprises an electric saw, and the moving element comprises a blade.

31. The electric device according to claim 29, wherein a beam direction of the radar is towards the moving element.

32. The electric device according to claim 21, wherein the electric tool comprises an electric drill or an electric hammer.
